# FASCICULE DE BREVET EUROPEEN

(11) **EP 1 510 501 B1**
(45) Date de publication et mention de la délivrance du brevet: **14.09.2011**
(21) Numéro de dépôt: 04291816.9
(22) Date de dépôt: 15.07.2004
(51) Int. Cl.: C01B 37/00, B01J 20/18

(54) **Solide cristallisé IM-11 de type structural LTA et son procédé de préparation.**
IM-11 kristalliner Festkörper des Strukturtyps LTA und Verfahren zu seiner Herstellung
IM-11 cristalline solid having LTA-type structure and process for its preparation

(30) Priorité: 30.07.2003 FR 0309410
(43) Date de publication de la demande: 02.03.2005
(73) Titulaire: Institut Français du Pétrole, 92852 Rueil-Malmaison Cedex (FR)
(72) Inventeur: Harbuzaru, Bogdan, 69007 Lyon (FR); Paillaud, Jean Louis, 68100 Mulhouse (FR); Patarin, Joel, 68720 Flaxlanden (FR); Bats, Nicolas, 69590 Pomeys (FR); Simon, Laurent, 69003 Lyon (FR); Laroche, Catherine, 69003 Lyon (FR)

(56) Documents cités:
- EP-A- 0 292 363
- EP-A- 1 010 667
- WO-A-96/34827
- US-A- 5 518 707
- CORMA, AVELINO ET AL: "A large-cavity zeolite with wide pore windows and potential as an oil refining catalyst" NATURE (LONDON, UNITED KINGDOM) , 418, 514-517 CODEN: NATUAS; ISSN: 0028-0836, 2002, pages 514-517, XP002276873
- GABELICA ZELIMIR ET AL: "Silicogermanate with a Si:Ge ratio >= 2 - an MFI zeolite of novel composition" janvier 1989 (1989-01), ANGEW CHEM (INT ED ENGL) JAN 1989, VOL. 28, NR. 1, PAGE(S) 81 - 83 , XP002276614 * le document en entier *
- SCHREYECK LAURENCE ET AL: "Diaza-polyoxa-macrocycle 'Kryptofix222' as a new template for the synthesis of LTA-type AlPO4. Co-templating role of F<-> and/or (CH3)4N<+> ions" MICROPOROUS MESOPOROUS MATER; MICROPOROUS AND MESOPOROUS MATERIALS JUN 17 1998 ELSEVIER SCI B.V., AMSTERDAM, NETHERLANDS, vol. 22, no. 1-3, 17 juin 1998 (1998-06-17), pages 87-106, XP002276874

## Description

### Domaine technique

La présente invention se rapporte à un nouveau solide cristallisé microporeux de type structural LTA, à charpente neutre, et contenant du germanium et au moins un élément tétravalent autre que le germanium, appelé ci-après IM-11. Elle se rapporte également au procédé de préparation dudit solide IM-11 ainsi qu'à l'utilisation dudit solide en tant qu'adsorbant.

### Art antérieur

La recherche de nouveaux tamis moléculaires microporeux a conduit au cours des dernières années à la synthèse d'une grande variété d'aluminosilicates à structure zéolithique. Ces solides sont notamment caractérisés par leur composition chimique, le diamètre des pores qu'ils contiennent, la forme et la géométrie de leur système microporeux.

Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant: "Atlas of Zeolites Structure Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type structural CLO (US-5,420,279), ou encore les zéolithes ITQ-12 (US-6,471,939), ITQ-13 (US-6,471,941), CIT-5 (US-6,043,179), ITQ-21 (WO-02/092511) et ITQ-24 (R. Castaneda et al., J. Am. Chem. Soc., 2003, 125, 7820).

Plusieurs des zéolithes précédemment citées ont été synthétisées en milieu fluorure dans lequel l'agent mobilisateur n'est pas l'ion hydroxyde habituel mais l'ion fluorure selon un procédé initialement décrit par J.-L. Guth et al. (Proc. Int. Zeol. Conf., Tokyo, Août 17-22, 1986, p. 121). Les pH des milieux de synthèses sont typiquement proche de la neutralité. Un des avantages de ces systèmes réactionnels fluorés est de permettre l'obtention de zéolithes purement siliciques contenant moins de défauts que les zéolithes obtenues en milieu fortement basique traditionnel (J.M. Chézeau et al., Zeolites, 1991, 11, 598). Un autre avantage décisif lié à l'utilisation de milieux réactionnels fluorés est de permettre l'obtention de nouvelles topologies de charpente contenant des doubles cycles à quatre tétraèdres comme c'est le cas des zéolithes ITQ-7, ITQ-13 et ITQ-17. De plus, l'utilisation du germanium dans ces milieux de synthèse favorise également l'obtention d'une telle charpente comme dans le cas de la zéolithe ITQ-21. La zéolithe A (Linde Type A), un aluminosilicate préparé en milieu basique et de type structural LTA (T.B. Reed et D.W. Breck, J. Am. Chem. Soc., 1956, 78, p. 5972) contient également des doubles cycles à quatre tétraèdres. La charpente aluminosilicate de la zéolithe A est porteuse de charges négatives localisées au voisinage des tétraèdres aluminiques [AlO₄]⁻, lesdites charges négatives étant compensées par un cation de compensation, souvent un ion sodium. Le rapport Si/Al le plus élevé d'un solide cristallisé de type structural LTA est obtenu dans le cas de la zéolithe LZ-215 (US-4,503,023) par un processus de substitution de l'aluminium à partir d'une zéolithe de type N-A (R.M. Barrer, J. Chem. Soc., 1961, p. 971) en employant une solution de sels de fluorosilicate.

L'objectif de la présente invention est de proposer un nouveau solide cristallisé de type structural LTA, de préférence un germanosilicate, à charpente neutre. Le solide selon l'invention a l'avantage de présenter une porosité libérée du cation de compensation, nécessairement présent dans les solides zéolithiques ayant une charpente chargée négativement, par exemple dans la zéolithe A. L'absence de cations de compensation rend le volume poreux disponible plus important, ce qui est particulièrement intéressant pour des applications du solide selon l'invention dans des procédés d'adsorption. Le solide selon l'invention a également l'avantage de présenter une stabilité thermique satisfaisante.

### Description de l'invention

La présente invention a pour objet un nouveau solide cristallisé IM-11 de type structural LTA, à charpente neutre, présentant une composition chimique exprimée sur une base anhydre, en termes de mole d'oxydes, définie par la formule générale suivante : XO₂ : m YO₂ : q R : s F (I) dans laquelle R est le composé de formule 4,7,13,16,21,24-hexaoxa-1,10-diazabicyclo[8.8.8]hexacosane, X représente un ou plusieurs élément(s) tétravalent(s) différent(s) du germanium, Y représente le germanium, F est le fluor, m, q, s représentant respectivement le nombre de mole de YO₂, R et F, m est compris entre 0,1 et 4, q et s sont compris entre 0 et 1. Le solide IM-11 de type structural LTA selon l'invention présente un diagramme de diffraction de rayons X incluant au moins les raies inscrites dans le tableau 1.

Conformément à l'invention, la charpente du solide IM-11 est neutre : elle n'est porteuse d'aucune charge car les éléments X et Y, définis ci-dessus, sont tétravalents. Plus précisément, la charpente du solide IM-11 selon l'invention est localement et globalement neutre puisque les charges positives des éléments X et Y compensent exactement les charges négatives des atomes d'oxygènes présents au sommet des tétraèdres de la structure cristalline.

Le diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à ± 0,2° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IM-11 selon l'invention comporte au moins les raies aux valeurs de dₕₖₗ données dans le Tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,2Å et ± 0,008Å. Tableau 1 : Valeurs moyennes des dₕₖₗ et intensités relatives mesurées sur un diagramme de diffraction de rayons X du solide cristallisé IM-11 de l'invention.

| dₕₖₗ (Å) | 2 théta (°) | I/I₀ |
|---|---|---|
| 12,07 | 7,32 | F |
| 8,53 | 10,36 | mf |
| 6,98 | 12,68 | FF |
| 6,03 | 14,66 | ff |
| 5,40 | 16,40 | ff |
| 4,27 | 20,76 | f |
| 4,03 | 22,05 | m |
| 3,82 | 23,24 | ff |
| 3,64 | 24,42 | mf |
| 3,35 | 26,59 | ff |
| 3,23 | 27,60 | f |
| 2,93 | 30,47 | f |
| 2,85 | 31,40 | ff |
| 2,64 | 33,97 | ff |
| 2,58 | 34,79 | f |
| 2,47 | 36,38 | ff |
| 2,42 | 37,17 | ff |
| 2,37 | 37,91 | ff |
| 2,33 | 38,68 | ff |
| 2,01 | 44,97 | ff |
| 1,96 | 46,25 | ff |
| 1,89 | 48,17 | ff |
| 1,86 | 48,78 | ff |
| 1,84 | 49,43 | ff |

où FF = très fort ; m = moyen ; f = faible ; F = fort ; mf = moyen faible ; ff = très faible. L'intensité relative I/I₀ est donnée en rapport à une échelle d'intensité relative où il est attribué une valeur de 100 à la raie la plus intense du diagramme de diffraction des rayons X : ff<15 ; 15≤f<30;30≤mf<50;50≤m<65;65≤F<85;FF≥85.

Le solide cristallisé IM-11 selon l'invention présente une structure cristalline de type structural LTA dont la charpente est neutre. La structure cristalline du solide cristallisé IM-11 selon l'invention est une structure tridimentionnelle formée de tétraèdres. Elle comprend notamment des unités de type double cycles à quatre tétraèdres.

Avantageusement, le rapport Ge/X de la charpente du solide cristallisé IM-11 selon l'invention est compris entre 0,3 et 3, de préférence compris entre 0,3 et 2. De manière préférée, m est compris entre 0,2 et 3 et de manière encore plus préférée, m est compris entre 0,5 et 2. Les valeurs de q et s sont comprises entre 0 et 1, avantageusement comprises entre 0,01 et 1, très avantageusement comprises entre 0,1 et 0,9 et de manière encore plus avantageuse entre 0,6 et 0,9.

Conformément à l'invention, X est préférentiellement choisi parmi le silicium, l'étain et le titane. De manière préférée, X est le silicium : le solide cristallisé IM-11 selon l'invention est alors un métallosilicate, plus précisément un germanosilicate, cristallisé présentant un diagramme de diffraction des rayons X identique à celui décrit dans le Tableau 1.

Dans le cas où le solide cristallisé IM-11 selon l'invention se présente sous sa forme brute de synthèse, c'est-à-dire directement issu de la synthèse et préalablement à toute étape de calcination(s) bien connue de l'Homme du métier, ledit solide IM-11 comporte au moins un composé organique azoté R de formule 4,7,13,16,21,24-hexaoxa-1,10-diazabicyclo[8.8.8]hexacosane connu sous le nom commercial Kryptofix^{®}222 (Aldrich). Le Kryptofix^{®}222 joue le rôle de structurant organique. Le structurant peut être éliminé, de façon contrôlée, par les voies classiques de l'état de la technique comme des traitements thermiques et/ou chimiques. Selon un autre mode préféré de l'invention, le Kryptofix^{®}222 est mélangé à une autre espèce chimique, préférentiellement un cation alcalin, par exemple le sodium, dans le cas où le solide IM-11 est sous forme brute de synthèse.

Le solide cristallisé IM-11selon l'invention est de préférence un solide zéolithique. L'invention concerne également un procédé de préparation du solide cristallisé IM-11 dans lequel on fait réagir un mélange aqueux comportant au moins une source d'au moins un oxyde XO₂, au moins une source de l'oxyde YO₂, et éventuellement au moins une source d'un oxyde M_{2/w}O et au moins un composé organique azoté R, ou un de ses précurseurs organiques azotés ou un de ses produits de décomposition, le mélange présentant généralement la composition molaire suivante :
- M_{2/w}O/(XO₂+YO₂): : 0 à 3, de préférence 0 à 1, et de manière très préférée 0,01 à 1,
- H₂O/(XO₂+YO₂): : 1 à 50, de préférence 2 à 30,
- R/(XO₂+YO₂): : 0,1 à 3, de préférence 0,1 à 1,
- F/(XO₂+YO₂): : 0,1 à 3, de préférence 0,1 à 1,
- YO₂/XO₂: : 0,2 à 1, et de manière très préférée 0,2 à 0,7
- LₐS/XO₂: : 0 à 0,5, de préférence 0 à 0,3,
où X est un ou plusieurs élément(s) tétravalent(s) différent(s) du germanium, de préférence le silicium, Y est le germanium, M est un cation de valence w pouvant comporter un cation de métal alcalin et/ou de l'ammonium. LₐS est un sel, S étant un anion de valence a et L étant un ion de métal alcalin ou ammonium qui peut être similaire à M ou un mélange de M et d'un autre ion de métal alcalin ou un ion ammonium nécessaire pour équilibrer l'anion S, S pouvant comporter un radical acide ajouté par exemple sous la forme d'un sel de L ou d'un sel d'aluminium. Le cation M utilisé est de préférence un métal alcalin, notamment du sodium. On peut citer à titre d'exemple pour S des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Bien que le LₐS ne soit pas essentiel, il peut accélérer la cristallisation du solide IM-11 selon l'invention à partir du mélange réactionnel et il peut également affecter la taille et la forme des cristaux constituant le solide IM-11. Dans tous les cas, la réaction se poursuit jusqu'à obtention de la cristallisation.

Le fluor peut être introduit sous forme de sels de métaux alcalins ou d'ammonium comme par exemple NaF, NH₄F, NH₄HF₂ ou sous forme d'acide fluorhydrique ou encore sous forme de composés hydrolysables pouvant libérer des anions fluorures dans l'eau comme le fluorure de silicium SiF₄ ou les fluorosilicates d'ammonium (NH₄)₂SiF₆ ou de sodium Na₂SiF₆. Conformément au procédé selon l'invention, R est un structurant organique azoté de formule 4,7,13,16,21,24-hexaoxa-1,10-diazabicyclo[8.8.8]hexacosane (Kryptofix^{®}222).

Le cation M peut être ajouté sous forme d'hydroxydes ou de sels d'acides minéraux à condition que le rapport M_{2/w}O/(XO₂+YO₂) soit respecté.

La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". Les silices dissoutes qui peuvent être employées comprennent également les silicates au verre soluble disponibles dans le commerce, contenant 0,5 à 6,0, notamment 2,0 à 4,0 moles de SiO₂ par mole d'oxyde de métal alcalin, des silicates de métaux alcalins "actifs" tels que définis dans le brevet britannique GB-1.193.254, et des silicates obtenus par dissolution de silice dans un hydroxyde de métal alcalin ou un hydroxyde d'ammonium quaternaire, ou encore un mélange de ceux-ci. De manière préférée, la source de silicium est le TEOS.

La source de l'oxyde YO₂ est par exemple un oxyde de germanium GeO₂.

Selon un mode de réalisation préféré du procédé selon l'invention, on fait réagir un mélange aqueux comportant de la silice, un oxyde de germanium, de l'acide fluorhydrique et du Kryptofix^{®}222.

Le procédé selon l'invention consiste à préparer un mélange réactionnel aqueux appelé gel et renfermant au moins une source d'au moins un oxyde XO₂, au moins une source de l'oxyde YO₂, éventuellement au moins une source d'un oxyde M_{2/w}O et au moins ledit composé organique azoté R. Les quantités desdits réactifs sont ajustées de manière à conférer à ce gel une composition permettant sa cristallisation en solide cristallisé IM-11 de formule XO₂ : m YO₂ : q R : s F, où m, q, et s répondent aux critères définis plus haut. Puis le gel est soumis à un traitement hydrothermal jusqu'à ce que le solide cristallisé IM-11 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore préférentielle à une température qui ne dépasse pas 175°C jusqu'à la formation des cristaux de solide IM-11 selon l'invention. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des noyaux et/ou la durée totale de cristallisation. Il peut également être avantageux d'utiliser des germes afin de favoriser la formation du solide cristallisé IM-11 au détriment d'impuretés. De tels germes comprennent des solides cristallisés, notamment des cristaux de solide IM-11. Les germes cristallins sont généralement ajoutés dans une proportion comprise entre 0,01 et 10 % du poids de l'oxyde XO₂, de préférence de la silice, utilisé dans le mélange réactionnel.

A la fin de la réaction, la phase solide est filtrée et lavée; elle est ensuite prête pour des étapes ultérieures telles que le séchage, la déshydratation et la calcination en vue d'éliminer toute substance organique absorbée, présente dans la porosité du solide IM-11. Les conditions opératoires d'élimination du structurant organique sont des conditions de calcination contrôlées en température et atmosphère. Le solide est tout d'abord chauffé sous atmosphère inerte pendant une durée comprise entre 1 et 6 heures à une température comprise entre 100 et 300°C. Cette atmosphère peut être obtenue par exemple par un balayage d'azote. Il est ensuite calciné sous atmosphère inerte à une température comprise entre 400 et 700°C pendant une durée d'au moins 4 heures. L'atmosphère de l'enceinte est ensuite remplacée par une atmosphère contenant de l'oxygène afin de permettre la combustion des produits formés lors de l'étape de calcination sous atmosphère inerte.

Lorsque le solide IM-11 selon l'invention est débarrassé du structurant organique, les valeurs de q et s sont préférentiellement nulles.

La présente invention concerne également l'utilisation dudit solide IM-11 en tant qu'adsorbant. De préférence, ledit solide IM-11 est débarrassé du structurant organique lorsqu'il est utilisé comme adsorbant. Lorsqu'il est utilisé comme adsorbant, le solide cristallisé IM-11 selon l'invention est généralement dispersé dans une phase matricielle inorganique qui contient des canaux et des cavités qui permettent l'accès du fluide à séparer au solide cristallisé. Ces matrices sont préférentiellement des oxydes minéraux, par exemple des silices, des alumines, des silices-alumines ou des argiles. La matrice représente de manière générale entre 2 et 25% en masse de l'adsorbant ainsi formé.

L'invention est illustrée au moyen des exemples suivants.

### Exemple 1 : préparation d'un solide cristallisé IM-11 selon l'invention

On mélange dans un bécher en polypropylène et sous agitation 7ml d'eau avec 6,535g de Kryptofix^{®}222 (K222, Aldrich) et 1,454g d'oxyde de germanium amorphe (Aldrich). Après la dissolution sous agitation de l'oxyde, 4,339g de tétraéthoxysilane (Aldrich) sont ajoutés. On évapore à température ambiante et sous agitation l'éthanol et l'excès d'eau jusqu'à ce que l'on atteigne une masse de 14,969g. On ajoute alors 0,869g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.

La composition molaire du gel correspondant est :
0,6 SiO₂ : 0,4 GeO₂ : 0,5 K222 : 0,5 HF : 10 H₂O

L'autoclave est chauffé pendant 4 jours à 170°C dans une étuve. Pendant la synthèse l'autoclave est continuellement agité, l'axe longitudinal de l'autoclave tournant avec une vitesse d'environ 15 tours/minute dans un plan perpendiculaire à l'axe de rotation. Le pH de synthèse est proche de 7. Après filtration, le produit est lavé à l'eau distillée et séché à 70°C. Le produit solide séché a été analysé par diffraction X de poudres et identifié comme étant constitué de solide zéolithique IM-11 de type structural LTA.

L'analyse chimique du produit par fluorescence X a été effectuée et donne le rapport SiO₂/GeO₂ = 2,11.

### Exemple 2 : préparation d'un solide cristallisé IM-11 selon l'invention

On mélange dans un bécher en polypropylène et sous agitation 8ml d'eau avec 6,276g de Kryptofix^{®}222 (K222, Aldrich) et 0,698g d'oxyde de germanium amorphe (Aldrich). Après la dissolution sous agitation de l'oxyde, 5,555g de tétraéthoxysilane (Aldrich) sont ajoutés. On évapore à température ambiante et sous agitation l'éthanol et l'excès d'eau jusqu'à ce que l'on atteigne une masse de 14,074g. On ajoute alors 0,833g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.

La composition molaire du gel correspondant est :
0,8 SiO₂ : 0,2 GeO₂ : 0,5 K222 : 0,5 HF : 10 H₂O

L'autoclave est chauffé pendant 4 jours à 170°C dans une étuve. Pendant la synthèse l'autoclave est continuellement agité, l'axe longitudinal de l'autoclave tournant avec une vitesse d'environ 15 tours/minute dans un plan perpendiculaire à l'axe de rotation. Le pH de synthèse est proche de 7. Après filtration, le produit est lavé à l'eau distillée et séché à 70°C. Le produit solide séché a été analysé par diffraction X de poudres et identifié comme étant constitué d'un solide zéolithique IM-11 de type structural LTA.

L'analyse chimique du produit par fluorescence X a été effectuée et donne le rapport SiO₂/GeO₂ = 2,99.

### Exemple 3 : préparation d'un adsorbant contenant le solide cristallisé zéolithique IM-11.

Le solide utilisé est le solide brut de synthèse de l'exemple 1 et comprenant le structurant organique 4,7,13,16,21,24-hexaoxa-1,10-diazabicyclo[8.8.8]hexacosane (Kryptofix^{®}222).

Ce solide subit tout d'abord un chauffage sous balayage d'azote à la température de 200°C pendant 4 heures puis une calcination toujours sous atmosphère d'azote à 550°C pendant 8 heure. A la suite de ces premiers traitements, le solide obtenu est calciné à 550°C pendant 8 heure sous flux d'air puis encore 8 heures sous flux d'oxygène.

Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 h sous air et calcinés à 550°C pendant 2 heures sous flux d'air dans un four à moufle.

L'adsorbant ainsi préparé est composé de 80% du solide zéolithique IM-11 et de 20% d'alumine.

## Revendications

1. Solide cristallisé IM-11 de type structural LTA, à charpente neutre, présentant une composition chimique exprimée sur une base anhydre, en termes de mole d'oxydes, définie par la formule générale XO₂ : m YO₂ : q R : s F dans laquelle R est le composé de formule 4,7,13,16,21,24-hexaoxa-1,10-diazabicyclo[8.8.8]hexacosane, X représente un ou plusieurs élément(s) tétravalent(s) différent(s) du germanium, Y représente le germanium, F est le fluor, m, q, s représentant respectivement le nombre de mole de YO₂, R et F, m est compris entre 0,1 et 4, q et s sont compris entre 0 et 1.

2. Solide cristallisé IM-11 selon la revendication 1 dans lequel le rapport Ge/X est compris entre 0,3 et 3.

3. Solide cristallisé IM-11 selon la revendication 1 ou 2 dans lequel m est compris entre 0,2 et 3.

4. Solide cristallisé IM-11 selon l'une des revendications 1 à 3 dans lequel q et s sont compris entre 0,1 et 0,9.

5. Solide cristallisé IM-11 selon l'une des revendications 1 à 4 dans lequel X est le silicium.

6. Procédé de préparation d'un solide cristallisé IM-11 selon l'une des revendications 1 à 5 consistant à procéder au mélange d'au moins une source d'au moins un oxyde XO₂, d'au moins une source de l'oxyde YO₂, éventuellement d'au moins une source d'un oxyde M_{2/w}O et d'au moins un composé organique azoté R de formule 4,7,13,16,21,24-hexaoxa-1,10-diazabicyclo[8.8.8]hexacosane, puis à procéder au traitement hydrothermal dudit mélange jusqu'à ce que ledit solide cristallisé IM-11 se forme, la composition molaire du mélange réactionnel étant telle que :
M_{2/w}O/(XO₂+YO₂) : 0 à 3,
H₂O/(XO₂+YO₂) : 1 à 50,
R/(XO₂+YO₂) : 0,1 à 3,
F/(XO₂+YO₂) : 0,1 à 3,
YO₂/XO₂ : 0,2 à 1,
LₐS/XO₂ : 0 à 0,50.
où M est un cation de valence w pouvant comporter un cation de métal alcalin et/ou de l'ammonium, LₐS est un sel, S étant un anion de valence a et L étant un ion de métal alcalin ou ammonium qui peut être similaire à M ou un mélange de M et d'un autre ion de métal alcalin ou un ion ammonium nécessaire pour équilibrer l'anion S.

7. Procédé selon la revendication 6 tel que des germes sont additionnés dans le mélange réactionnel.

8. Procédé selon l'une des revendications 6 à 7 tel que la source de l'oxyde YO₂ est un oxyde de germanium GeO₂.

9. Utilisation du solide cristallisé IM-11 selon l'une des revendications 1 à 5 ou préparé selon l'une des revendications 6 à 8 comme adsorbant.

## Claims

1. A IM-11 crystalline solid with structure type LTA, with a neutral framework, having a chemical composition expressed as the anhydrous base in terms of moles of oxide defined by the general formula XO₂: mYO₂:qR: sF (I), in which R is a compound with formula 4,7,13,16,21,24-hexaoxa-1,10-diazabicyclo[8.8.8]hexacosane, X represents one or more tetravalent element(s) other than germanium, Y represents germanium, F is fluorine, m, q, s represent the number of moles of YO₂, R and F respectively, m is in the range 0.1 to 4, and q and s are in the range 0 to 1.

2. A IM-11 crystalline solid according to claim 1, in which the ratio Ge/X is in the range 0.3 to 3.

3. A IM-11 crystalline solid according to claim 1 or 2, in which m is in the range 0.2 to 3.

4. A IM-11 crystalline solid according to one of claims 1 to 3, in which q and s are in the range 0.1 to 0.9.

5. A IM-11 crystalline solid according to one of claims 1 to 4, in which X is silicon.

6. A process for preparing a crystalline solid IM-11 according to one of claims 1 to 5, consisting of mixing at least one source of at least one oxide XO₂, optionally at least one source of an oxide YO₂, optionally at least one source of an oxide M_{2/w}O and at least one organic nitrogen-containing compound R with formula 4,7,13,16,21,24-hexaoxa-1,10-diazabicyclo[8.8.8]hexacosane, then carrying out a hydrothermal treatment of said mixture until said crystalline solid IM-11 is formed, the molar composition of the reaction mixture being such that:
M_{2/w}O/(XO₂ + YO₂) : 0 to 3;
H₂O/(XO₂ + YO₂) : 1 to 50;
R/(XO₂ + YO₂) : 0.1 to 3;
F/(XO₂ + YO₂) : 0.1 to 3;
YO₂/XO₂ : 0.2 to 1;
LₐS/XO₂ : 0 to 0.5,
where M is a cation with valency w which may comprise an alkali metal and/or ammonium cation, LₐS is a salt, S being an anion with valency a and L being an alkali metal or ammonium ion which may be similar to M or a mixture of M and another alkali metal ion or an ammonium ion necessary to balance the anion S.

7. A process according to claim 6, in which seeds are added to the reaction mixture.

8. A process according to one of claims 6 or 7, in which the source of the oxide YO₂ is a germanium oxide GeO₂.

9. Use of a crystalline solid IM-11 according to one of claims 1 to 5, or prepared according to one of claims 6 to 8, as an adsorbent.

## Patentansprüche

1. Kristallisierter Feststoff IM-11 des Strukturtyps LTA, mit neutralem Gerüst, der eine chemische Zusammensetzung aufweist, welche, auf einer wasserfreien Basis ausgedrückt, in Mol an Oxiden, der allgemeinen Formel XO₂ : m YO₂ : q R : s F entspricht, wobei R die Verbindung der Formel 4,7,13,16,21,24-Hexaoxa-1,10-diazabicyclo[8.8.8]hexacosan ist, X für ein oder mehrere vierwertige(s) Element(e) steht, das/die sich von Germanium unterscheidet/unterscheiden, Y für Germanium steht, F Fluor ist, m, q, s für die Anzahl an Molen von an YO₂, R beziehungsweise F stehen, m im Bereich von 0,1 bis 4 liegt, q und s im Bereich von 0 bis 1 liegen.

2. Kristallisierter Feststoff IM-11 nach Anspruch 1, wobei das Ge/X-Verhältnis im Bereich von 0,3 bis 3 liegt.

3. Kristallisierter Feststoff IM-11 nach den Ansprüchen 1 oder 2, wobei m im Bereich von 0,2 bis 3 liegt.

4. Kristallisierter Feststoff IM-11 nach einem der Ansprüche 1 bis 3, wobei q und s im Bereich von 0,1 und 0,9 liegen.

5. Kristallisierter Feststoff IM-11 nach einem der Ansprüche 1 bis 4, wobei X Silicium ist.

6. Verfahren zur Herstellung eines kristallisierten Feststoffs IM-11 nach einem der Ansprüche 1 ä 5, das darin besteht, mindestens eine Quelle mindestens eines Oxids XO₂, mindestens eine Quelle des Oxids YO₂, möglicherweise mindestens eine Quelle eines Oxids des Typs M_{2/w}O und mindestens eine stickstoffhaltige organische Verbindung R der Formel 4,7,13,16,21,24-Hexaoxa-1,10-diazabicyclo[8.8.8]hexacosan zu vermischen, woraufhin eine hydrothermale Behandlung der Mischung durchgeführt wird, bis sich der kristallisierte Feststoff IM-11 bildet, wobei die Reaktionsmischung die folgende molare Zusammensetzung aufweist:
M_{2/w}O/(XO₂+YO₂) : 0 bis 3,
H₂O/(XO₂+YO₂) : 1 bis 50,
R/(XO₂+YO₂) : 0,1 bis 3,
F/(XO₂+YO₂) : 0,1 bis 3,
YO₂/XO₂ : 0,2 bis 1,
LₐS/XO₂ : 0 à 0,50.
wobei M ein Kation der Valenz w ist, das ein Alkalimetall- und/oder Ammoniumkation aufweisen kann, LₐS ein Salz ist, wobei S ein Anion der Valenz a ist und wobei L ein Alkalimetall- oder Ammoniumion ist, das M ähnlich sein kann, oder eine Mischung aus M und einem weiteren Alkalimetallion oder ein Ammoniumion, das zum Ausgleich des Anions S erforderlich ist.

7. Verfahren nach Anspruch 6, derart, dass der Reaktionsmischung Keime zugesetzt werden.

8. Verfahren nach einem der Ansprüche 6 bis 7, derart, dass die Quelle des Oxids YO₂ ein Germaniumoxid GeO₂ ist.

9. Verwendung des kristallisierten Feststoffs IM-11 nach einem der Ansprüche 1 bis 5, oder hergestellt nach einem der Ansprüche 6 bis 8, als Adsorptionsmittel.
